Europäisches Patentamt

European Patent Office

Office européen des brevets

(19)

(11) Veröffentlichungsnummer: **0 191 899**
**B1**

(12) **EUROPÄISCHE PATENTSCHRIFT**

(45) Veröffentlichungstag der Patentschrift: **14.03.90**

(51) Int. Cl.⁵: **G 01 B 7/08**

(21) Anmeldenummer: **85112279.6**

(22) Anmeldetag: **27.09.85**

(54) **Sensor zur Messung elektrischer Eigenschaften im elektrischen Feld.**

(30) Priorität: **16.02.85 DE 3505387**

(43) Veröffentlichungstag der Anmeldung:
**27.08.86 Patentblatt 86/35**

(45) Bekanntmachung des Hinweises auf die
Patenterteilung:
**14.03.90 Patentblatt 90/11**

(84) Benannte Vertragsstaaten:
**FR GB IT NL**

(56) Entgegenhaltungen:
**EP-A-0 038 551**
**WO-A-85/03120**
**GB-A-2 136 130**
**US-A-3 775 277**
**US-A-3 882 381**

(73) Patentinhaber: **Heraeus Sensor GmbH**
**Heraeusstrasse 12-14**
**D-6450 Hanau am Main (DE)**

(72) Erfinder: **Röss, Dieter, Dr.**
**Fasanenweg 4**
**D-8759 Hösbach (DE)**

(74) Vertreter: **Heinen, Gerhard, Dr.**
**W.C. Heraeus GmbH Zentralbereich Patente und**
**Lizenzen Heraeusstrasse 12-14**
**D-6450 Hanau (DE)**

EP 0 191 899 B1

Courier Press, Leamington Spa, England.

**Beschreibung**

Die Erfindung betrifft einen Sensor zur Messung dielektrischer Eigenschaften von Meßobjekten im elektrischen Feld mittels dreier Elektroden, von denen eine erste und eine zweite felderzeugende Elektrode in unterschiedlichen Horizontalebenen angeordnet sind und mit einer um 180° verschobenen Wechselspannung beaufschlagt werden, und die dritte Elektrode als Sensorelektrode in der gleichen Horizontalebene wie die erste felderzeugende Elektrode zu dieser mit Abstand angeordnet ist.

Aus der EP-A-00 38 551 ist ein Sensor zur berührungslosen Bestimmung der Lage und der dielektrischen Eigenschaften von Objekten bekannt, welcher zwei an einen Oszillator angeschlossene felderzeugende Elektroden aufweist, wobei in dem erzeugten elektrischen Feld eine Sensorelektrode untergebracht ist. Die drei Elektroden sind in Form von zueinander parallelen Elektrodenstäben ausgebildet und in einer keramischen Isoliermasse eingebettet. Die beiden felderzeugenden Elektroden werden jeweils mit einer um 180° verschobenen Wechselspannung beaufschlagt, wobei die Amplituden der beiden Wechselspannungen so gewählt sind, daß die Sensorelektrode bei Abwesenheit zu erfassender Objekte keinen Strom führt, da die durch die beiden felderzeugenden Elektroden bewirkten Ströme gegenseitig kompensiert sind. Wird nun ein Objekt mit zur Umgebung unterschiedlicher Dielektrizitätskonstante unsymmetrisch zur Meßelektrode in das Feld eingebracht, so bewirkt eine Änderung der Feldverteilung durch das Objekt eine Potentialverschiebung an der Sensorelektrode. Aufgrund der Phasenlage ist es möglich festzustellen, auf welcher Seite der Sensorelektrode sich das Objekt im Wechselfeld befindet; die Amplitude des Wechselstromes ist ein Maß für den Abstand des Objektes von einem definierten Punkt oder von einer Ebene des Sensors. In einer praktischen Ausführungsform wird ein Drei-Elektroden-System beschrieben, welches mit einer Abschirmung versehen ist, so daß das Feld nur an der Stelle der offenen Abschirmung in den Raum austritt, und der Sensor somit eine Fühlrichtung aufweist. Zur Durchführung von Abstandsmessungen kann ein Schwellwertglied als Indikator für den richtigen Abstand eingesetzt werden.

Der aus der obengenannten EP-A-00 38 551 bekannte Sensor ist vom Meßgerät örtlich trennbar, so daß er auch in einer aggressiven Atmosphäre, wie in einem Ofen, beispielsweise zur Bestimmung der Oberkante von Werkzeugstükken, einsetzbar ist. Werden jedoch darüber hinaus erhöhte Forderungen an die Präzision der Abstandsmessung, wie sie beispielsweise bei der Bestimmung der Stärke aufgedampfter optischer Schichten auftreten, gestellt, muß aufgrund des verhältnismäßig weiten Abstandes der stangenförmigen Elektroden mit ungenauen Meßergebnissen gerechnet werden.

Die unter Beanspruchung der Priorität vom 14.01.1984 am 18.07.1985 veröffentlichte WO 85/03120 beschreibt eine Vorrichtung zur kontinuierlichen Messung der Dicke eines mit Hilfe einer Beschichtungsanlage auf einem Trägermaterial erzeugten Materialniederschlags; dabei wird die Ablagerungsdicke auf der Meßelektrode einer Referenzsonde elektrisch durch Erfassen des Wechselstromsignals auf der Meßelektrode bestimmt. Die Meßelektrode befindet sich zwischen zwei in einem mit Einlaßöffnungen versehenen Metallgehäuse angeordneten felderzeugenden Elektroden, die mit gegeneinander um 180° phasenverschobenen Wechselspannungen beaufschlagt werden, deren Amplituden bei Meßbeginn so eingestellt sind, daß an der Meßelektrode kein Signal auftritt. Der während der Beschichtung eines Trägermaterials auf der in der Nähe befindlichen Meßelektrode erzeugte Materialniederschlag bewirkt eine Verstimmung des Feldverlaufs in der Referenzsonde und dadurch einen Meßstrom in der an einen Auswerteschaltkreis angeschlossenen Meßelektrode.

Die Erfindung stellt sich die Aufgabe, einen Sensor zu schaffen, der eine genaue Messung von geringen, vorzugsweise im Mikrometerbereich liegenden Schichtstärken aufzubauender oder der Restdicke abzubauender Schichten mit vorgegebenen Materialeigenschaften nach dem D-Feld-Prinzip ermöglicht. Der Sensor soll möglichst geringe Abmessungen aufweisen, hochstabil sein, unter erschwerten Umweltbedingungen — wie sie z. B. bei hohen Temperaturen, in aggressiven Gasen sowie unter Reinraum-Bedingungen vorliegen — einsetzbar und mit geringem Aufwand möglichst präzise herstellbar sein.

Die Aufgabe wird dadurch gelöst, daß die Elektroden jeweils in Form einer dünnen elektrisch leitenden Schicht ausgebildet sind, wobei die zweite felderzeugende Elektrode auf einem elektrisch isolierenden Träger und die erste felderzeugende Elektrode sowie die Sensorelektrode auf eine die zweite felderzeugende Elektrode bedeckende elektrisch isolierende Schicht so aufgebracht sind, daß sowohl die erste felderzeugende Elektrode als auch die Sensorelektrode einen Teil der zweiten felderzeugenden Elektrode überdeckt, und daß die erste felderzeugende Elektrode und die Sensorelektrode als unterlage für das zu messende Objekt dienen.

Der Träger besteht aus glasigem oder keramischem Werkstoff, wobei insbesondere Siliziumdioxid oder hochreines Silizium verwendet werden.

In einer bevorzugten Ausführungsform besteht der Sensor aus einem Träger aus Siliziumdioxid, auf dem die felderzeugende Elektrode und die Sensorelektrode photolithographisch in Dünnschichttechnik aufgebracht sind. Die beiden Elektroden weisen in einer Ebene angeordnete Teilarme auf, welche kammartig ineinandergreifen, ohne sich zu berühren. Der zwischen diesen Elektroden befindliche Raum weist beim Einsatz zur Messung elektrisch isolierender Schichten keine zusätzliche äußere Beschichtung auf. Zur Messung elektrisch leitender Beschichtungen sind die beiden Elektroden mit einem elektrisch isolierenden Überzug in der Stärke der zu messenden Schicht abgedeckt, der auch den Raum zwischen diesen beiden Elektroden wenigstens teilweise ausfüllt. Vorzugsweise besitzt der Überzug eine Schichtdicke im Bereich von 1 μm; als Isoliermaterial wird vorzugsweise Glas oder Quarzglas verwendet. Bei Verzicht auf den Überzug ist es möglich, eine direkte Messung zwischen der felderzeugenden Elektrode und der neben ihr liegenden Sensorelektrode durchzuführen. Unterhalb der beiden nebeneinander liegenden Elektroden — und von diesen durch eine Isolationsschicht getrennt — ist die zweite felderzeugende Elektrode als zusammenhängende leitfähige Schicht angeordnet. Sie besteht vorzugsweise aus Metall, wie beispielsweise Aluminium oder Gold.

Als vorteilhaft erweist es sich, daß die erfindungsgemäßen Sensoren nach dem Prinzip des in der Halbleitertechnik üblichen Planar-Verfahrens hergestellt werden können. Eine Änderung des aufbringbaren schichtförmigen Objekts führt zu einer Änderung der beiden Teilfelder zwischen den felderzeugenden Elektroden und der Sensorelektrode. Dies führt nach dem Prinzip der D-Feld-Sonde zu einer die Schichtdicken oder die dielektrischen Eigenschaften des schichtförmigen Objekts charakterisierenden Meßgröße. Fertigungstoleranzen des erfindungsgemäßen Sensors können durch Abgleich der Feldgeneratoren, mit denen die felderzeugenden Elektroden verbunden sind, kompensiert werden.

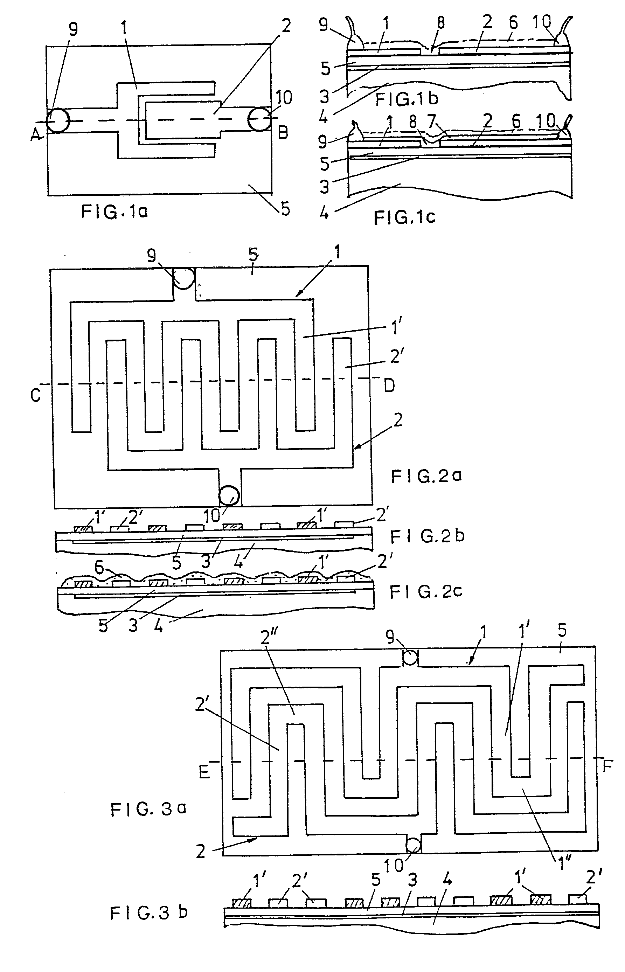

Im folgenden wird die Erfindung anhand der in den Figuren 1 bis 3 dargestellten Ausführungsbeispielen näher erläutert.

Figuren 1 a bis 1 c zeigen eine einfache Ausbildung des Sensors, Figuren 2 a bis 2 c zeigen einen Sensor mit kammartig ineinandergreifenden Elektroden, Figuren 3 a und 3 b zeigen einen Sensor mit mäanderförmig verlaufenden Elektroden.

Figur 1 a zeigt in einer Draufsicht die felderzeugenden Elektrode 1 und die Sensorelektrode 2, welche in einer einzigen Ebene auf einer isolierenden Schicht 5 angeordnet sind. Die Elektroden 1 und 2 sind jeweils über Anschlüsse 9, 10 mit einer Meßanordnung verbindbar. Über den Anschluß 9 ist die felderzeugende Elektrode 1 mit einem Feldgenerator verbindbar. Unterhalb der isolierenden Schicht 5 ist die in der Draufsicht nicht sichtbare zweite Feldelektrode angeordnet, die ebenfalls mit einem Feldgenerator verbindbar ist.

Figur 1 b zeigt die erfindungsgemäße Anordnung im Schnitt längs der Linie A-B gemäß Figur 1 a. In dieser Figur sind die beiden Elektroden 1, 2, welche sich auf der isolierenden Schicht 5 befinden, erkennbar. Mit 4 ist der Träger bezeichnet. Über beiden Elektroden 1, 2 bzw. in deren Zwischenraum ist das schichtförmige Objekt 6 erkennbar, welches aufgrund seiner dielektrischen Eigenschaften die über die Sensorelektrode 2 erfaßte Meßgröße beeinflußt. Unterhalb der isolierenden Schicht 5 ist die zweite felderzeugende Elektrode 3 erkennbar. Sie besitzt ebenfalls einen Kontaktanschluß für die Verbindung mit einem Feldgenerator; dieser Anschluß ist jedoch zur besseren Übersicht nicht dargestellt.

Die zu bestimmenden Schichtstärken des schichtförmigen Objekts 6 liegen im Bereich von 50 Å bis zu 1 μm, soweit der erfindungsgemäße Sensor in der Halbleitertechnik eingesetzt wird. Bei Anwendungen des Sensors in der optischen Beschichtungstechnik liegen die Schichtstärken des Objekts 6 zwischen 100 Å und 10 μm. Die geforderte Genauigkeit beträgt dabei etwa 1 %.

Figur 1 c zeigt ebenfalls einen Querschnitt entlang der Linie A-B gemäß Figur 1 a, jedoch für den Fall, daß der Sensor zur Messung von elektrisch leitfähigen schichtförmigen Objekten 6 eingesetzt wird. Hierfür ist es notwendig, die Elektroden 1, 2 mit einer elektrisch isolierenden Schicht 7 abzudecken, um einen Kurzschluß zwischen den Elektroden zu vermeiden.

Figur 2 a zeigt ein Ausführungsbeispiel, bei dem auf einem Träger 4 die Elektroden 1, 2 mit ihren Teilarmen 1', 2' kammartig in einer Ebene ineinandergreifen. Zwischen den Teilarmen 1' und der zweiten felderzeugenden Elektrode 3 bilden sich elektrische Feldlinien aus, die nicht nur auf der direkten Verbindungslinie zwischen beiden felderzeugenden Elektroden 1, 3 existieren, sondern nach Art eines Streufeldes auch die Teilarme 2' der Sensorelektrode 2 erfassen. Wie bereits erwähnt, kann bei vorgegebener Dielektrizitätskonstante ε aus der zwischen beiden Elektroden 1, 3 auftretenden dielektrischen Verschiebungsdichte auf die Schichtstärke des Objekts 6 geschlossen werden. Für die Messung eines elektrisch leitenden schichtförmigen Objekts 6 müssen jedoch die Elektroden 1, 2 mittels eines elektrisch isolierenden Überzugs 7 vor einer direkten, galvanischen Stromleitung zwischen beiden Elektroden 1, 2 geschützt werden. Eine derartige Anordnung ist auch entsprechend für schichtförmige Objekte 6 aus Halbleitermaterial vorzusehen. Die in Figur 2 b und 2 c dargestellten Querschnitte längs einer Linie C-D entsprechen den in den Figuren 1 b und 1 c dargestellten Schnittbildern.

Figur 2 c zeigt einen Schnitt längs der Linie C-D der Figur 2 a mit dem aufzubringenden schichtförmigen Objekt 6.

Als besonders vorteilhaft erweist sich die aus den Figuren 2 a, 2 b und 2 c ersichtliche Vielzahl von Teilarmen 1', 2'; es resultiert eine streufeldartige, großflächige Verteilung von Feldlinien. Die zweite felderzeugende Elektrode 3 besteht dabei aus einer zusammenhängenden Metallfläche.

Figur 3 a zeigt eine Anordnung, bei der nebeneinander liegende Teilarme 1' der felderzeugenden Elektrode 1 durch Elektrodenstege 1'' so miteinander verbunden sind, daß die Elektrode 1 ein durchgehendes Mäanderband bildet. Entsprechend sind auch die Teilarme 2' der Sensorelektrode 2 durch Elektrodenstege 2'' miteinander verbunden. Aufgrund der Mäanderstruktur wird eine verhältnismäßig große Fläche sowohl der felderzeugenden Elektrode 1 als auch der Sensorelektrode 2 auf einem kleinen Raum untergebracht; eine solche Anordnung eignet sich vorteilhafterweise zur Herstellung von Mikrosensoren. Aufgrund der sich regelmäßig wiederholenden Struktur ergibt sich eine vereinfachte Herstellung in Form eines durchgehenden Mäanders, wobei das gewünschte Format des Sensors durch einen einfachen Trennvorgang zugeschnitten werden kann.

Figur 3 b zeigt einen Längsschnitt entlang der Linie E-F gemäß Figur 3 a. In dieser Figur ist erkennbar, daß mit Ausnahme der äußeren Teilarme 1', 2' wechselweise jeweils zwei Teilarme 1' der Elektrode 1 und zwei Teilarme 2' der Elektrode 2 aufeinanderfolgen. Die zweite felderzeugende Elektrode 3 befindet sich wiederum auf dem Träger 4 und ist von den Elektroden 1 und 2 durch die isolierende Schicht 5 elektrisch getrennt. Der in Figur 3 b dargestellte Querschnitt entspricht in Aufbau und Funktion den in den Figuren 1 b und 1 c dargestellten Schnittbildern.

Bei einer miniaturisierten Bauweise läßt sich eine Vielzahl von erfindungsgemäßen Sensoren im Mikroformat auf einem plättchenartigen Träger 4 aufbauen, so daß eine einzelne Sonde nur jeweils für die Messung einer Schicht oder einiger weniger Schichten verwendbar wird. Auf diese Weise ist es möglich, bei zahlreichen Schichten jede Schicht mit der gleichen Genauigkeit zu vermessen. Eine derartige Sonde kann einer integrierten Halbleiter-Schaltung (IC) entsprechend kontaktiert und gesockelt sein. Durch eine bewegliche Blende ist das Beschichtungsfeld für das schichtförmige Objekt begrenzbar.

**Patentansprüche**

1. Sensor zur Messung dielektrischer Eigenschaften von Meßobjekten im elektrischen Feld mittels dreier Elektroden, von denen eine erste (1) und eine zweite (3) felderzeugende Elektrode in unterschiedlichen Horizontalebenen angeordnet sind und mit einer um 180° verschobenen Wechselspannung beaufschlagt werden, und die dritte Elektrode als Sensorelektrode (2) in der gleichen Horizontalebene wie die erste felderzeugende Elektrode zu dieser mit Abstand angeordnet ist, dadurch gekennzeichnet, daß die Elektroden jeweils in Form einer dünnen elektrisch leitenden Schicht ausgebildet sind, wobei die zweite felderzeugende Elektrode (3) auf einem elektrisch isolierenden Träger (4) und die erste felderzeugende Elektrode (1) sowie die Sensorelektrode (2) auf eine die zweite felderzeugende Elektrode bedeckende elektrisch isolierende Schicht so aufgebracht sind, daß sowohl die erste felderzeugende Elektrode als auch die Sensorelektrode einen Teil der zweiten felderzeugenden Elektrode überdeckt, und daß die erste felderzeugende Elektrode und die Sensorelektrode als unterlage für das zu messende Objekt dienen.

2. Sensor nach Anspruch 1, dadurch gekennzeichnet, daß die erste felderzeugende Elektrode und die Sensorelektrode mit einer elektrisch isolierenden Schicht (7) bedeckt sind.

3. Sensor nach Anspruch 2, dadurch gekennzeichnet, daß die Schichtstärke der elektrisch isolierenden Schicht (7) so groß ist, daß sie etwa der des zu messenden Objekts (6) entspricht.

4. Sensor nach Anspruch 2, dadurch gekennzeichnet, daß der zwischen der ersten felderzeugenden Elektrode und der Sensorelektrode durch ihren Abstand gebildete Raum (8) wenigstens teilweise von der Schicht (7) ausgefüllt ist.

5. Sensor nach einem der vorangehenden Ansprüche 1 bis 4, dadurch gekennzeichnet, daß die erste felderzeugende Elektrode und die Sensorelektrode streifenförmig nebeneinanderliegend angeordnet sind, und daß die zweite felderzeugende Elektrode eine zusammenhängende Fläche bildet.

6. Sensor nach einem der vorangehenden Ansprüche 1 bis 4, dadurch gekennzeichnet, daß die erste felderzeugende Elektrode und die Sensorelektrode kammartig ineinandergreifen.

7. Sensor nach einem der vorangehenden Ansprüche 1 bis 4, dadurch gekennzeichnet, daß die erste felderzeugende Elektrode und die Sensorelektrode jeweils Teilarme (1', 2') aufweisen, die ihrerseits durch Elektrodenstege (1'', 2'') zur Bildung eines Mäanders miteinander verbunden sind.

8. Sensor nach Anspruch 1, dadurch gekennzeichnet, daß der Träger (4) aus glasigem oder keramischem Werkstoff, insbesondere Siliziumdioxid, besteht.

9. Sensor nach Anspruch 1, dadurch gekennzeichnet, daß der Träger (4) aus hochreinem Silizium besteht.

**Revendications**

1. Capteur pour la mesure de caractéristiques diélectriques d'objets à mesurer dans le champ électrique au moyen de trois électrodes parmi lesquelles une première (1) et une deuxième (3) électrode génératrice de champ sont agencées dans des plans horizontaux différents et attaquées par une tension alternative décalée de 180° et la troisième électrode, en tant qu'électrode-capteur (2), est agencée dans le même plan horizontal que la première électrode génératrice de champ, à distance de cette dernière, caractérisé par le fait que les électrodes sont réalisées chacune sous forme d'une mince couche électriquement conductrice, la deuxième électrode génératrice de champ (3) étant agencée sur un support électriquement isolant (4) et la première électrode génératrice de champ (1) ainsi que l'électrode-capteur (2) étant agencées sur une couche électriquement isolante couvrant la deuxième électrode génératrice de champ, de manière qu'aussi bien la première électrode génératrice de champ que l'électrode-capteur recouvrent une partie de la deuxième électrode génératrice de champ, et que la première électrode génératrice de champ et l'électrode-capteur servent de support-substrat pour l'objet à mesurer.

2. Capteur selon revendication 1, caractérisé par le fait que la première électrode génératrice de champ et l'électrode-capteur sont couvertes d'une couche électriquement isolante (7).

3. Capteur selon revendication 2, caractérisé par le fait que l'épaisseur de la couche électriquement isolante (7) est d'une valeur telle qu'elle correspond à peu près à celle de l'objet à mesurer (6).

4. Capteur selon revendication 2, caractérisé par le fait que l'espace (8) formé entre la première électrode génératrice de champ et l'électrode-capteur, cet espace résultant de leur intervalle, est au moins partiellement comblé par la couche (7).

5. Capteur selon l'une des revendications 1 à 4 précédentes, caractérisé par le fait que la première électrode génératrice de champ et l'électrode-capteur sont agencées l'une à côté de l'autre, en forme de bandes, et par le fait que la deuxième électrode génératrice de champ forme une surface continue.

6. Capteur selon l'une des revendications 1 à 4 précédentes, caractérisé par le fait que la première électrode génératrice de champ et l'électrode-capteur sont mutuellement imbriquées à la manière de peignes.

7. Capteur selon l'une des revendications 1 à 4 précédentes, caractérisé par le fait que la première électrode génératrice de champ et l'électrode-capteur présentent chacune des bras partiels (1', 2') qui sont eux-mêmes reliés entre eux par des âmes d'électrode (1'', 2''), pour former un méandre.

8. Capteur selon revendication 1, caractérisé par le fait que le support (4) est constitué par un matériau vitreux ou céramique, notamment dioxyde de silicium.

9. Capteur selon revendication 1, caractérisé par le fait que le support (4) consiste en silicium de grande pureté.

**Claims**

1. A sensor for measuring dielectric properties of objects of measurement in the electric field by means of three electrodes of which a first (1) and a second (3) field-generating electrodes are arranged in different horizontal planes and are acted upon by an alternating voltage displaced through 180° and the third electrode is arranged as a sensor electrode (2) with mutual spacing from and in the same horizontal plane as the first field-generating electrode, characterised in that the electrodes are in each case produced in the form of a thin conductive layer, the second field-generating electrode (3) being applied on an electrically insulating carrier (4) and the first field-generating electrode (1) as well as the sensor electrode (2) being applied on an electrically insulating layer coating the second field-generating electrode in such a way that the first field-generating electrode as well as the sensor electrode overlap a part of the second field-generating electrode and that the first field-generating electrode and the sensor electrode serve as a base for the object to be measured.

2. A sensor according to claim 1, characterised in that the first field-generating electrode and the sensor electrode are coated with an electrically insulating layer (7).

3. A sensor according to claim 2, characterised in that the coating thickness of the electrically insulating layer (7) is so great that it corresponds approximately to that of the object (6) to be measured.

4. A sensor according to claim 2, characterised in that the space (8) formed by the gap between the first field-generating electrode and the sensor electrode is at least partly filled by the layer (7).

5. A sensor according to one of the preceding claims 1 to 4, characterised in that the first field-generating electrode and the sensor electrode are arranged one beside another in strip form and that the second field-generating electrode forms a continuous surface.

6. A sensor according to one of the preceding claims 1 to 4, characterised in that the first field-generating electrode and the sensor electrode intexterdigitate in a comb-like manner.

7. A sensor according to one of the preceding claims 1 to 4, characterised in that the first field-generating electrode and the sensor electrode in each case comprise component branches (1', 2') which for their part are joined together by electrode webs (1'', 2'') to form a meander.

8. A sensor according to claim 1, characterised in that the carrier (4) consists of a vitreous or ceramic material, especially silicon dioxide.

9. A sensor according to claim 1, characterised in that the carrier (4) consists of high purity silicon.

EP 0 191 899 B1

FIG.1a
FIG.1b
FIG.1c
FIG.2a
FIG.2b
FIG.2c
FIG.3a
FIG.3b